# EUROPEAN PATENT SPECIFICATION

(11) **EP 3 768 032 B1**
(45) Date of publication and mention of the grant of the patent: **28.09.2022**
(21) Application number: 19186273.9
(22) Date of filing: 15.07.2019
(51) Int. Cl.: H04W 12/06, H04W 76/12, H04W 76/16, H04W 88/16

(54) **SYSTEM FOR MAMS COMMUNICATION**
SYSTEM ZUR MAMS-KOMMUNIKATION
SYSTÈME DE COMMUNICATION MAMS

(43) Date of publication of application: 20.01.2021
(73) Proprietor: KONTRON TRANSPORTATION FRANCE SAS, 78066 St Quentin Yvelines Cedex (FR)
(72) Inventor: GRUET, Christophe, 78180 Montigny le Bretonneux (FR); BEICHT, Peter, 88682 Salem (DE); KERNSTOCK, Karl, 3652 Leiben (AT)
(74) Representative: Weiser & Voith Patentanwälte Partnerschaft

(56) References cited:
- WO-A1-2019/032972
- "3rd Generation Partnership Project; Technical Specification Group Services and System Aspects; Study on Access Traffic Steering, Switching and Splitting support in the 5G system architecture (Release 16)", 3GPP STANDARD; TECHNICAL REPORT; 3GPP TR 23.793, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.5.0, 12 June 2018 (2018-06-12), pages 1-68, XP051451693, [retrieved on 2018-06-12]
- KANUGOVI NOKIA F BABOESCU BROADCOM J ZHU INTEL J MUELLER AT&T S SEO KOREA TELECOM S: "Multiple Access Management Services; draft-kanugovi-intarea-mams-framework-04.t xt", MULTIPLE ACCESS MANAGEMENT SERVICES; DRAFT-KANUGOVI-INTAREA-MAMS-FRAMEWORK-04.T XT; INTERNET-DRAFT: INTAREA, INTERNET ENGINEERING TASK FORCE, IETF; STANDARDWORKINGDRAFT, INTERNET SOCIETY (ISOC) 4, RUE , no. 4 31 May 2019 (2019-05-31), pages 1-141, XP015133159, Retrieved from the Internet: URL:https://tools.ietf.org/html/draft-kanu govi-intarea-mams-framework-04 [retrieved on 2019-05-31]
- "3rd Generation Partnership Project; Technical Specification Group Services and System Aspects; System Architecture for the 5G System; Stage 2 (Release 16)", 3GPP DRAFT; DRAFT_23501-G20_CRS_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2 11 July 2019 (2019-07-11), XP051756434, Retrieved from the Internet: URL:http://www.3gpp.org/ftp/tsg_sa/WG2_Arc h/Latest_SA2_Specs/DRAFT_INTERIM/DRAFT_235 01-g20_CRs_Implemented.zip [retrieved on 2019-07-11]

## Description

The present invention relates to a system for communication between a first terminal and a second terminal, comprising a first gateway configured for connection to the first terminal on the one hand and to a set of at least two parallel wireless networks on the other hand, a first of said networks including a 5G Radio Access and a second of said networks being a non-5G network, and a second gateway configured for connection to said set of networks on the one hand and the second terminal on the other hand.

Systems of this kind, known as MAMS (Multiple Access Management Services) frameworks, have been described by, e.g., the IETF (Internet Engineering Task Force) in J. Zhu et al., "User-Plane Protocols for Multiple Access Management Service", INTAREA Internet Draft of August 4, 2017, IETF Trust. A current implementation of a MAMS system is the ATSSS (Access Traffic Steering, Switching and Splitting) service standardized in the 3GPP (3rd Generation Partnership Project) Technical Report TR 23.793 "Study on Access Traffic Steering, Switching and Splitting support in the 5G system architecture (Release 16)" for the 5G network standard. An overview of the system architecture and basic procedures of 5G networks is given in 3GPP Technical Standard TS 23.501 and TS 23.502.

ATSSS support in 3GPP 5G systems provides for the combination of 3GPP and non-3GPP Radio Access Networks (RANs) as multiple parallel communication paths between two terminals, in particular to implement Active-Standby, Priority-Based, Best-Access, Redundant, and Load-Balance steering policies which use one or more of the parallel 3GPP and non-3GPP RANs for communication. The ATSSS protocol defined in the 5G standard uses so-called Multi Access Protocol Data Unit (MA-PDU) sessions which combine several "child" PDU sessions, each established over one of the RANs, into a single "parent" session. Communicating terminals may then stay agnostic of the underlying PDU child sessions used by the MAMS policy currently in place.

MAMS architectures, and in particular the recent 5G ATSSS services, are generally used to integrate legacy Radio Access Technologies (RATs) such as WLAN, e.g. Wifi, WiMax or any IEEE 802.11x Standard, or any 2G, 3G or 4G technologies like GPRS, UMTS, or LTE, alltogether called "non-3GPP" RATs, with today's 5G RATs for said multipath communication. Specifically, ATSSS of 5G is a so-called "core-centric" integration of non-5G RATs into the core of a 5G network by using an N3IWF (Non-3GPP InterWorking Function) gateway of the 5G network as defined in 3GPP TS 23.501 Release 16. Via such an N3IWF gateway any legacy non-3GPP Radio Access can be attached to the 5G Core Network (5GC), whereas native 5G Radio Access, which includes at least one 5G gNodeB, is used for the 5G communication path within the MAMS.

In the "core-centric" type of integration, that ATSSS represents, the 5G Radio Access is a native part of the 5G network in which the ATSSS service is provided and which has the N3IWF gateways for the integration of the non-3GPP RATs. Therefore, in the 5G ATSSS implementation of MAMS the 5G Radio Access is tightly integrated or interlinked with the 5GC in which the ATSSS function is performed.

The invention sets is aim to overcome the limitations of the prior art and to provide a system for communication with increased versatility.

This aim is achieved with a system as defined by appended claim 1 for communication between a first terminal and a second terminal, comprising:
a first gateway configured for connection to the first terminal on the one hand and to a set of at least two parallel wireless networks on the other hand, a first of said networks including a 5G Radio Access and a second of said networks being a non-5G network, and
a second gateway configured for connection to said set of networks on the one hand and the second terminal on the other hand,
which system is characterized in that the first of said networks, to which the first gateway is configured for connection, is a 5G network comprised of a first 5G Core Network and said 5G Radio Access,
to which purpose the first gateway comprises a first 5G User Equipment having a first modem configured for connection either to a second 5G User Equipment connected to the 5G Radio Access or to an N3IWF gateway of the first 5G Core Network, and having a second modem configured for connection to the second network, and hosting a first User Plane Function, UPF, which controls the use of said modems,
in that the second gateway comprises a second 5G Core Network with a set of N3IWF gateways for connection to said set of networks and hosting a second UPF which controls the use of said N3IWF gateways, and
in that the first and second UPF are configured to perform a 5G ATSSS function selecting one or more of said networks for communication between the first and the second terminal.

The system of the invention shifts all ATSSS functions from the (first) 5GC which provides the 5G Radio Access to a second 5GC which is "wrapped around" the first 5GC. The second 5GC implements and is responsible only for the MAMS handling of the multipath communication over the 5G and non-5G Radio Accesses. Or, seen the other way around, the ATSSS functionality implemented by the second, outer 5GC is isolated from and does not need any core network functionalities of the first 5GC that provides the 5G Radio Access. In this way, the ATSSS functionalities which are performed by the second 5GC can, e.g., be virtualized and hosted on sites completely different from the first 5G network.

With the invention service operators of the first and second 5G networks become technically independent. The second 5G network can be virtualized on any hardware capable of running the necessary 5G ATSSS functions. Failures in the first 5GC do not propagate into the second 5GC but can be absorbed by the ATSSS policy in place. As a result, ATSSS services which integrate a non-3GPP Radio Access into a 5G Radio Access environment can be rolled-out in a more versatile and reliable way, without any need to modify existing 5G networks involved in the communication paths of the multipath MAMS system.

According to a preferred embodiment of the invention, the second 5GC in the second gateway does not have any 5G Radio Access connected thereto. In particular, the second 5GC is favourably reduced to the functionalities of an Authentication Server Function, AUSF, a Unified Data Management, UDM, an Access and Mobility Management Function, AMF, a Network Exposure Function, NEF, a Policy Control Function, PCF, and a Session Management Function, SMF. The second 5GC is thus as "lean" as possible and reduced only to those functions which are inevitably necessary for performing the ATSSS function.

As is known from the prior art of conventional 5G ATSSS implementations, the first and the second UPF establish a Multi Access Protocol Data Unit, MA-PDU, session comprised of a first child PDU session over the first network and a second child PDU session over the second network, to perform said ATSSS function.

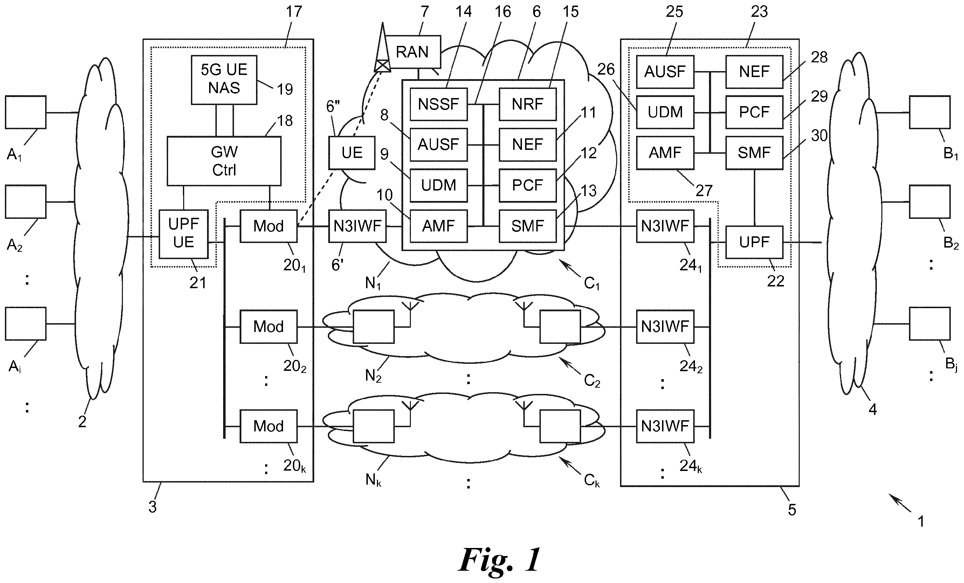

The invention will now be described in further detail by means of exemplary embodiments thereof under reference to the enclosed drawing, in which Fig. 1 shows a system for MAMS communication according to the invention in a schematic block diagram.

Fig. 1 shows a system 1 for MAMS (Multiple Access Management Services) communication between two terminals Aᵢ, Bⱼ over a set of multiple communication paths C₁, C₂, ..., generally Cₖ. The first terminal Aᵢ may be one of a plurality of terminals A₁, A₂, ..., generally Aᵢ, connected - directly or over an intermediate network 2 - to a first gateway 3. The second terminal Bⱼ may also be one of a multitude of terminals B₁, B₂, ..., generally Bⱼ, connected - directly or over an intermediate network 4 - to a second gateway 5. The first gateway 3 and the second gateway 5 are interconnected over said set of communication paths Cₖ.

The terminals Aᵢ, Bⱼ can be of any type. For example, the first terminal Aᵢ can be an application client and the second terminal Bⱼ an application server, or vice versa. The intermediate networks 2, 4, if present, can be any IP or non-IP based LAN (Local Area Network).

Each of the set of parallel communication paths Cₖ is formed by a wireless network N₁, N₂, ... generally Nₖ. At least one of the set of the networks Nₖ (here: the first network N₁) is a 5G network according to the 3GPP 5G standard TS 23.501, 23.502 et seq., for example of Release 16 or higher. The 5G network N₁ includes a 5G Core Network (5GC) 6 and a 5G Radio Access (RAN) 7.

According to the 5G standard, the 5GC 6 comprises, i.a., an AUSF (Authentication Server Function) 8, a UDM (Unified Data Management) 9, an AMF (Access and Mobility Management Function) 10, a NEF (Network Exposure Function) 11, a PCF (Policy Control Function) 12, an SMF (Session Management Function) 13, (optionally) an NSSF (Network Slice Selection Function) 14, and (optionally) an NRF (Network Repository Function) 15, which are all interconnected over a data bus 16.

At least one other network of the set of networks Nₖ (here: exemplarily the second network N₂), is a non-5G network, e.g., a 2G network such as a GPRS network, a 3G network such as an UMTS network, a 4G network such as an LTE network, a WLAN, Wifi, WiMax or a network according to any IEEE 802.11x standard, or any other wireless data connection.

The first gateway 3 is in the form of a "modified" 5G User Equipment (UE), i.e., a 5G UE with additional components as follows. A processor 17 in the gateway 3 runs all programs of the gateway 3 such as a gateway controller 18 and the 5G UE functions 19, including the 5G UE's non-Access Stratum (NAS) layer functions. Furthermore, the gateway 3 includes a set of modems 20₁, 20₂, ... generally 20ₖ, each of which is controlled by the 5G UE's gateway controller 18 and is connected to one of the networks Nₖ.

The connection of the modem 20₁ to the 5G network N₁ can be either directly to a dedicated Non-3GPP InterWorking Function (N3IWF) gateway 6' of the 5GC 6, or to any 5G UE 6" (e.g., via a modem of the UE 6") which is wirelessly attached to the 5G RAN 7 of the 5GC 6.

The gateway 3, in particular the processor 17, hosts a User Plane Function (UPF) 21 that controls which one or more of the modems 20ₖ is currently used for communication. To this end, the UPF 21 cooperates with a second UPF 22 hosted on the second gateway 5, as will be explained further below.

The second gateway 5 comprises, or is implemented by, respectively, a second 5GC 23 which hosts said second UPF 22. The second 5GC 23 comprises a set of N3IWF gateways 24₁, 24₂, ..., generally 24ₖ, each of which is connected to one of the networks Nₖ and controlled by the UPF 22 in the second 5GC 23.

In particular, the first and second UPFs 21, 22 cooperate to perform a 5G ATSSS (Access Traffic, Steering, Switching and Splitting) function which selects one or more of the networks Nₖ for communication between the first and the second terminals Aᵢ, Bⱼ. Within this ATSSS function appropriate policy rules are established to, e.g., prioritize one network Nₖ over another, to use two or more networks Nₖ in parallel for increased bandwidth, to use a network Nₖ as a fall-back or back-up for another, etc. Possible policies which can be implemented by the ATSSS function are described in 3GPP TR 23.793 and include, i.a., Active-Standby, Priority-Based, Based-Access, Redundant, and Load-Balance steering modes.

To connect the UPFs 21, 22 to each other, i.e., to register the UPF 21 of the first gateway 3 for ATSSS service with the respective UPF 22 in the 5GC 23 of the second gateway 5, the 5GC 23 in the second gateway 5 needs to have only those functions of the 5G Service Based Architecture (SBA) which are necessary to this end. For example, the second 5GC 23 may only have the 5G functional entities AUSF 25, UDM 26, AMF 27, NEF 28, PCF 29 and SMF 30, whereas all other 5G functions such as NRF, NSF etc. can be omitted. In particular, the second 5GC 23 does not need to have an own 5G Radio Access. Instead, the second 5GC 23 is equipped with the set of N3IWF gateways 24ₖ to communicate with the set of modems 20ₖ of the first gateway 3 over the networks Nₖ.

When the two UPFs 21, 22 cooperate to perform the ATSSS function that selectively uses one or more of the modems 20ₖ and N3IWF gateways 24ₖ to establish one ore more of the communication paths Cₖ according to the ATSSS policy in place, the UPFs 21, 22 may resort to establishing a Multi Access Protocol Data Unit (MA-PDU) session to communicate. The MA-PDU session established between the UPFs 21, 22 is comprised of a set of child PDU sessions each of which is established over one of the networks Nₖ. The properties and identifiers of this MA-PDU session can then be communicated to the terminals Aᵢ and Bⱼ so that they can communicate over a single session, without needing to know which child PDU sessions the gateways 3, 5 invoke to perform the current ATSSS policy.

The invention is not restricted to the specific embodiments described in detail herein, but encompasses all variants, modifications and combinations thereof that fall within the scope of the appended claims.

## Claims

1. System for communication between a first terminal and a second terminal, comprising:
a first gateway (3) configured for connection to the first terminal (Aᵢ) on the one hand and to a set of at least two parallel wireless networks (Nₖ) on the other hand, a first of said networks (N₁) including a 5G Radio Access (7) and a second of said networks (N₂) being a non-5G network, and
a second gateway (5) configured for connection to said set of networks (Nₖ) on the one hand and the second terminal (Bⱼ) on the other hand, which second gateway (5) comprises a second 5G Core Network (23) having a second Authentication Server Function, AUSF, (25), a second Unified Data Management, UDM, (26), a second Access and Mobility Management Function, AMF, (27), a second Network Exposure Function, NEF, (28), a second Policy Control Function, PCF, (29), and a second Session Management Function, SMF, (30),
**characterized in that** the first gateway (3) is configured for connection to a first of said networks (N₁) which is a 5G network comprised of a first 5G Core Network (6) having a first Authentication Server Function, AUSF, (8), a first Unified Data Management, UDM, (9), a first Access and Mobility Management Function, AMF, (10), a first Network Exposure Function, NEF, (11), a first Policy Control Function, PCF, (12), and a first Session Management Function, SMF, (13), and of said 5G Radio Access (7),
wherein the first gateway (3) comprises a first 5G User Equipment (17 - 19) having a first modem (20₁) configured for connection to the first 5G Core Network (6) either, via a modem of a second 5G User Equipment (6"), over said second 5G User Equipment (6") connected to the 5G Radio Access (7) or via a first Non-3GPP Interworking Function, N3IWF, gateway (6') of the first 5G Core Network (6), and having a second modem (20₂) configured for connection to the second network (N₂), and hosting a first User Plane Function, UPF, (21) which controls the use of said modems (20ₖ),
wherein the second gateway (5) comprises a set of at least two N3IWF gateways (24ₖ) for connection to said set of at least two networks (Nₖ) and hosting a second UPF (22) which controls the use of said at least two N3IWF gateways (24ₖ), and
**in that** the first and second UPF (21, 22) are configured to perform a 5G Access Traffic, Steering, Switching and Splitting, ATSSS, function selecting one or more of said networks (Nₖ) for communication between the first and the second terminal (Aᵢ, Bⱼ).

2. System according to claim 1, **characterized in that** the first and the second UPF (21, 22) establish a Multi Access Protocol Data Unit, MA-PDU, session comprised of a first child PDU session over the first network (N₁) and a second child PDU session over the second network (N₂) to perform said ATSSS function.

## Patentansprüche

1. System zur Kommunikation zwischen einem ersten Terminal und einem zweiten Terminal, umfassend:
ein erstes Gateway (3), welches zur Verbindung mit dem ersten Terminal (Aᵢ) einerseits und mit einer Menge von zumindest zwei parallelen drahtlosen Netzwerken (Nₖ) andererseits ausgebildet ist, wobei ein erstes der genannten Netzwerke (N₁) einen 5G Radio Access (7) enthält und ein zweites der genannten Netzwerke (N₂) ein Nicht-5G-Netzwerk ist, und
ein zweites Gateway (5), welches zur Verbindung mit der genannten Menge von Netzwerken (Nₖ) einerseits und mit dem zweiten Terminal (Bⱼ) andererseits ausgebildet ist, welches zweite Gateway (5) ein zweites 5G Core Network (23) umfasst, das eine zweite Authentication Server Function, AUSF, (25), ein zweites Unified Data Management, UDM, (26), eine zweite Access and Mobility Management Function, AMF, (27), eine zweite Network Exposure Function, NEF, (28), eine zweite Policy Control Function, PCF, (29) und eine zweite Session Management Function, SMF, (30) hat,
**dadurch gekennzeichnet, dass** das erste Gateway (3) zur Verbindung mit einem ersten der genannten Netzwerke (N₁) ausgebildet ist, welches ein 5G-Netzwerk ist, das aus einem ersten 5G Core Network (6), welches eine erste Authentication Server Function, AUSF, (8), ein erstes Unified Data Management, UDM, (9), eine erste Access and Mobility Management Function, AMF, (10), eine erste Network Exposure Function, NEF, (11), eine erste Policy Control Function, PCF, (12) und eine erste Session Management Function, SMF, (13) hat, und aus dem genannten 5G Radio Access (7) gebildet ist,
wobei das erste Gateway (3) ein erstes 5G User Equipment (17 - 19) umfasst, welches ein erstes Modem (20₁) hat, das zur Verbindung mit dem ersten 5G Core Network (6) entweder, via ein Modem eines zweiten 5G User Equipments (6"), über das genannte zweite 5G User Equipment (6"), das mit dem 5G Radio Access (7) verbunden ist, oder via ein erstes Non-3GPP Interworking Function, N3IWF, Gateway (6') des ersten 5G Core Network (6) ausgebildet ist, und ein zur Verbindung mit dem zweiten Netzwerk (N₂) ausgebildetes zweites Modem (20₂) hat und eine erste User Plane Function, UPF, (21) hostet, welche die Verwendung der genannten Modems (20ₖ) steuert,
wobei das zweite Gateway (5) eine Menge von zumindest zwei N3IWF-Gateways (24ₖ) zur Verbindung mit der genannten Menge von zumindest zwei Netzwerken (Nₖ) umfasst und eine die Verwendung der genannten zumindest zwei N3IWF-Gateways (24ₖ) steuernde zweite UPF (21, 22) hostet, und
dadurch, dass die erste und zweite UPF (21, 22) dazu ausgebildet sind, eine 5G Access Traffic, Steering, Switching and Splitting, ATSSS, Funktion auszuführen, welche eines oder mehr der genannten Netzwerke (Nₖ) zur Kommunikation zwischen dem ersten und dem zweiten Terminal (Aᵢ, Bⱼ) auswählt.

2. System nach Anspruch 1, **dadurch gekennzeichnet, dass** die erste und die zweite UPF (21, 22) eine Multi Access Protocol Data Unit, MA-PDU, Session herstellen, die aus einer ersten Child-PDU-Session über das erste Netzwerk (N₁) und einer zweiten Child-PDU-Session über das zweite Netzwerk (N₂) gebildet ist, um die genannte ATSSS-Funktion auszuführen.

## Revendications

1. Système de communication entre un premier terminal et un deuxième terminal, comprenant :
une première passerelle (3) conçue pour la connexion au premier terminal (Aᵢ) d'une part et à un ensemble d'au moins deux réseaux (Nₖ) parallèles sans fil d'autre part, un premier desdits réseaux (N₁) incluant un accès radio 5G (7) et un deuxième desdits réseaux (N₂) étant un réseau non 5G, et
une deuxième passerelle (5) conçue pour la connexion audit ensemble de réseaux (Nₖ) d'une part et au deuxième terminal (Bⱼ) d'autre part, laquelle deuxième passerelle (5) comprend un deuxième réseau central 5G (23) ayant une deuxième Authentification Server Function, AUSF, (25), une deuxième Unified Data Management, UDM, (26), une deuxième Access and Mobility Management Function, AMF, (27), une deuxième Network Exposure Function, NEF, (28), une deuxième Policy Control Function, PCF, (29), et une deuxième Session Management Function, SMF, (30),
**caractérisé en ce que** la première passerelle (3) est conçue pour la connexion à un premier desdits réseaux (N₁) qui est un réseau 5G composé d'un premier réseau central 5G (6) ayant une première Authentification Server Function, AUSF, (8) une première Unified Data Management, UDM, (9), une première Access and Mobility Management Function, AMF, (10), une première Network Exposure Function, NEF, (11) une première Policy Control Function, PCF, (12), et une première Session Management Function, SMF, (13), et dudit accès radio 5G (7),
dans lequel la première passerelle (3) comprend un premier équipement utilisateur 5G (17 - 19) ayant un premier modem (20₁) conçu pour la connexion au premier réseau central 5G (6), soit via un modem d'un deuxième équipement utilisateur 5G (6") par ledit deuxième équipement utilisateur 5G (6") connecté à l'accès radio 5G (7), soit via une première passerelle (6') d'une Non-3GPP Interworking Function, N3IWF, du premier réseau central 5G (6), et ayant un deuxième modem (20₂) conçu pour la connexion au deuxième réseau (N₂), et étant l'hôte d'une première User Plane Function, UPF, (21) qui commande l'utilisation desdits modems (20ₖ),
dans lequel la deuxième passerelle (5) comprend un ensemble d'au moins deux passerelles N3IWF (24ₖ) pour la connexion audit ensemble d'au moins deux réseaux (Nₖ) et est l'hôte d'une deuxième UPF (22) qui commande l'utilisation des dites au moins deux passerelles N3IWF (24ₖ), et
**en ce que** la première et la deuxième UPF (21, 22) sont conçues pour effectuer une fonction 5G Access Traffic, Steering, Switching and Splitting, ATSSS, sélectionnant un ou plusieurs desdits réseaux (Nₖ) pour la communication entre le premier et le deuxième terminal (Aᵢ, Bⱼ).

2. Système selon la revendication 1, **caractérisé en ce que** la première et la deuxième UPF (21, 22) établissent une session Multi Access Protocol Data Unit, MA-PDU, composée d'une première session PDU enfant sur le premier réseau (N₁) et une deuxième session PDU enfant sur le deuxième réseau (N₂) pour effectuer ladite fonction ATSSS.
